# EUROPEAN PATENT SPECIFICATION

(11) **EP 1 973 105 B1**
(45) Date of publication and mention of the grant of the patent: **22.02.2012**
(21) Application number: 08250970.4
(22) Date of filing: 19.03.2008
(51) Int. Cl.: G11B 5/55

(54) **Voice coil motor and magnetic circuit therefor**
Schwingspulenmotor und magnetische Schaltung dafür
Moteur à induit en cloche et circuit magnétique correspondant

(30) Priority: 20.03.2007 JP 2007072828
(43) Date of publication of application: 24.09.2008
(73) Proprietor: Shin-Etsu Chemical Co., Ltd., Tokyo (JP)
(72) Inventor: Yamada, Hiroyuki, Echizen-shi Fukui-ken (JP); Kato, Daiki, Echizen-shi Fukui-ken (JP); Nagamiya, Keiji, Echizen-shi Fukui-ken (JP)
(74) Representative: Stuart, Ian Alexander

(56) References cited:
- JP-A- 57 103 171
- US-A- 5 122 702
- US-A- 5 315 466
- US-A- 5 822 156
- US-A- 6 043 957

## Description

### TECHNICAL FIELD

This invention relates to voice coil motors for head positioning in magnetic disk units, and magnetic circuits for use therein.

### BACKGROUND OF THE INVENTION

In general, a hard disk unit includes a medium having a magnetic recording film deposited thereon, a spindle motor for rotating the medium at a predetermined rotational speed, a magnetic head for writing and reading information data, a voice coil motor (VCM) for driving the magnetic head, a controller and the like. The recent drastic price competition among manufacturers imposes a demand for further cost reduction on voice coil motors as well.

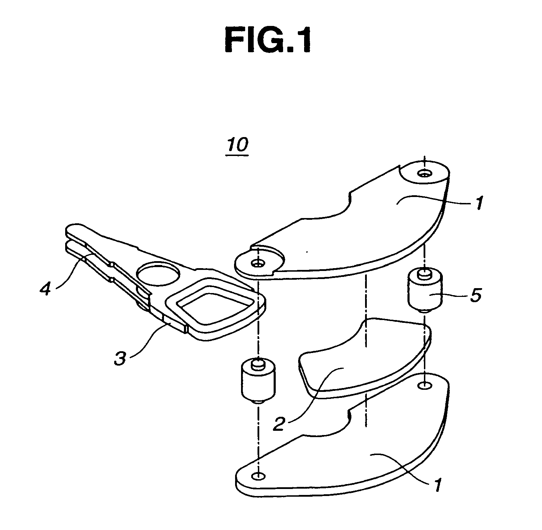

Referring to FIG. 1, a voice coil motor 10 includes magnetic material yokes 1, 1 and magnets (permanent magnets) 2 adhesively disposed thereon as described in JP-A 2004-23969. It is noted that the magnet adhesively disposed on the upper yoke 1 is omitted in FIG. 1 for simplicity of illustration. The yokes 1, 1 are coupled by magnetic material posts 5 such that magnets 2 face each other to define a space therebetween. A moving coil 3 on an arm 4 is located in the space between magnets 2. The voice coil motor 10 has a function of positioning a magnetic head. After magnets 2 are disposed on yokes 1, they are magnetized so as to produce alternate magnetic poles in the order of N and S.

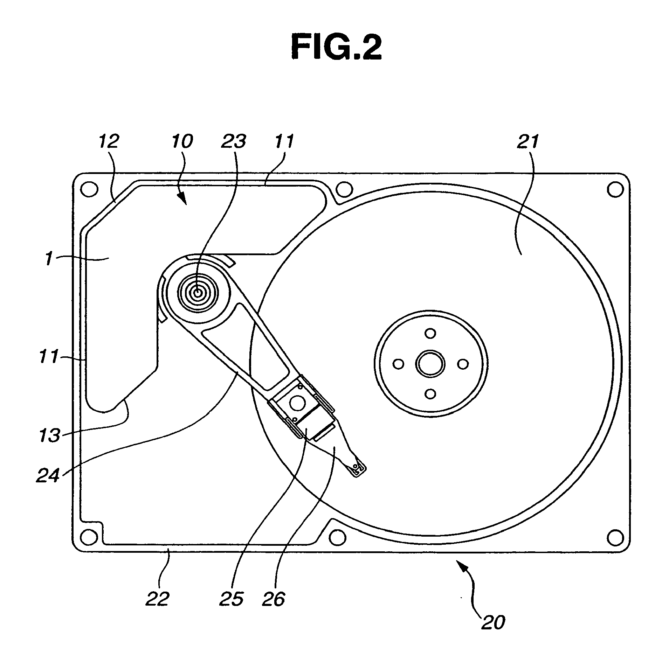

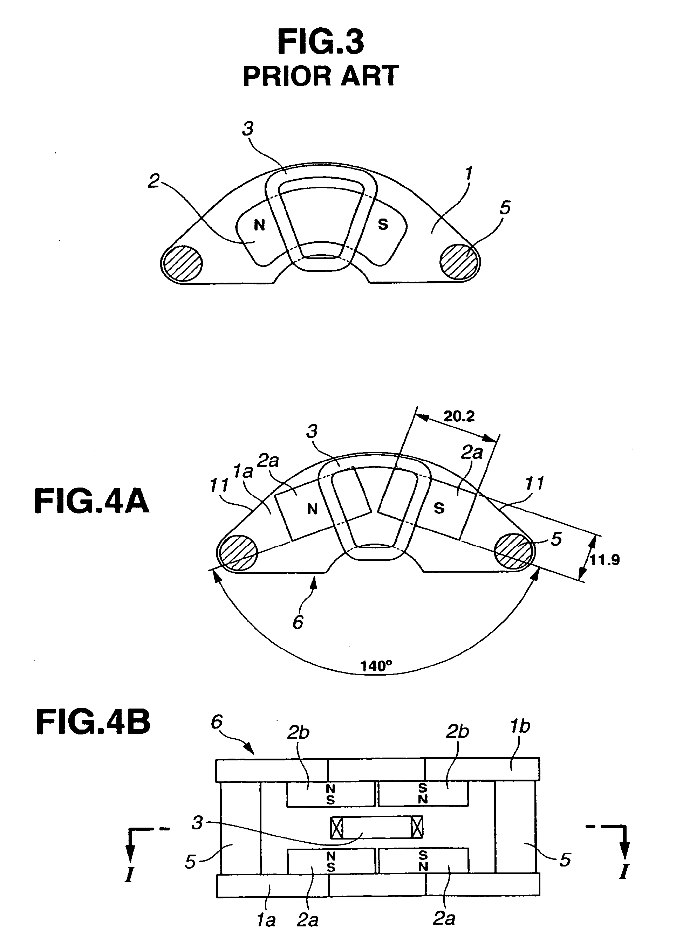

The shape of magnets is generally determined depending on the required performance of a voice coil motor. Referring to FIG. 2, a magnetic disk unit 20 is illustrated which includes a generally rectangular housing 22 for receiving a magnetic disk 21. The disk unit 20 further includes a pivot 23, an arm 24, a magnetic head actuator 25, and a suspension 26. The voice coil motor 10 is typically disposed at one corner of housing 22. To comply with this geometry, the yoke 1 is configured to (1) a triangular shape, typically right-angled triangular shape, including side portions 11, 11 opposed to the adjacent walls defining the one corner of the rectangular housing 22, an apex 12 defined by side portions 11, 11, and a bottom 13 opposed to apex 12, (2) a frusto-triangular shape in which the apex of a triangle is truncated or rounded, or (3) an arcuate, crescent or semi-circular ring shape in which the bottom of a triangle at its center is recessed or cut-off in a semi-circular, triangular or apex-rounded triangular form. The magnet is also configured in conformity to the yoke 1, specifically to an arcuate, truncated arcuate or truncated inverse-V shape as illustrated in FIG. 3.

To form a magnet of an arcuate or similar shape, a mold of a corresponding shape must be prepared and worked such as by shaping, cutting, grinding or otherwise machining, which operation is expensive and less productive. In the event a magnet of an arcuate or similar shape is used, it is difficult to secure the magnet to the yoke at the registered position. A problem arises particularly in a compact magnetic disk unit because the accuracy of magnet registration has a substantial influence on the torque.

Also JP-A 6-178523 discloses a magnetic circuit including two trapezoid magnet pieces juxtaposed on a yoke. Trapezoid magnet pieces are worked and produced through many steps and hence in low yields.

US-A-5 315 466 discloses a magnetic circuit for a voice coil motor with a magnetic material yoke bearing 2 magnet pieces. As illustrated, they appear to be identical, arcuate and concentric. US-A-6 043 957 discloses the use of yokes each bearing 4 magnet pieces. At least one must be of non-constant width, e.g. being trapezoidal.

### DISCLOSURE OF THE INVENTION

A preferred embodiment of the invention is a magnetic circuit for a voice coil motor offering one or more advantages such as more accurate positioning of a magnetic head, minimized torque variation, and highly effective magnet production; and a voice coil motor.

It has been found that when the magnet pieces used in a voice coil motor are formed to a rectangular prism or parallelepiped prism shape and two of the magnet pieces are disposed in an angle array, it is possible to achieve advantages such as minimized torque variation and more accurate positioning of a magnetic head. The invention is predicated on this finding.

The invention provides a magnetic circuit and a voice coil motor as defined below.
[1] A magnetic circuit for a voice coil motor, comprising a magnetic material yoke and magnet pieces disposed thereon to constitute magnet means. The magnet means disposed on the yoke consist of only a pair of magnet pieces. The magnetic circuit is characterised in that said magnet pieces are of rectangular prism or parallelepiped prism shape disposed thereon in an angle array such that there is an angle of from 60° to less than 180° included between their longitudinal axes.
[2] A magnetic circuit for a voice coil motor according to [1] and having a pair of opposed magnetic material yokes, wherein at least one of the pair of yokes has a said pair of magnet pieces, disposed so that the magnet means constituted thereby faces the other yoke; and wherein the magnet pieces of said yoke produce alternate magnetic poles.
[3] The magnetic circuit of [2], wherein a magnet means is disposed on each of the pair of yokes so that the magnet means face each other, each said magnet means consisting of two magnet pieces of rectangular prism or parallelepiped prism shape which are arranged in a said angle array, and wherein the magnet pieces of each magnet means produce alternate magnetic poles.
[4] A voice coil motor comprising the magnetic circuit of [2], and a moving coil located between the magnet means and the second yoke.

### BENEFITS OF THE INVENTION

Combination of two magnet pieces of rectangular prism or parallelepiped prism shape in a suitable angular array with a yoke and a coil of proper shape may provide a magnetic circuit which facilitates positioning and holding of the coil. The voice coil motor may have a more accurately positioned magnetic head.

### BRIEF DESCRIPTION OF THE DRAWINGS

FIG. 1 is an exploded perspective view of a voice coil motor (VCM).
FIG. 2 is a plan view of a magnetic disk unit.
FIG. 3 is a schematic plan view of a prior art VCM.
FIG. 4 schematically illustrates a VCM according to one embodiment of the invention, FIG. 4A being a plan view (taken along lines I-I in FIG. 4B) and FIG. 4B being an elevational view.
FIG. 5 is a schematic plan view of a VCM according to another embodiment of the invention.
FIG. 6 schematically illustrates a VCM according to a further embodiment of the invention, FIG. 6A being a plan view (taken along lines II-II in FIG. 6B) and FIG. 6B being an elevational view.
FIG. 7 schematically illustrates a coil torque measuring system.
FIG. 8 is a graph showing the coil torque of VCM as a function of angle.

### DESCRIPTION OF THE PREFERRED EMBODIMENT

In the following description, like reference characters designate like or corresponding parts throughout the several views. It is also understood that terms such as "top," "bottom," "lateral" and the like are words of convenience and used as seen looking at a figure and are not to be construed as limiting terms.

Referring to FIG. 4, a voice coil motor (VCM) according to one embodiment of the invention is illustrated. The magnetic circuit of the invention is composed essentially of a magnetic material yoke and a magnet. As shown in FIGS. 4A and 4B, the VCM includes a pair of yokes 1a, 1b having magnets 2a, 2b adhesively attached thereto. The yokes 1a, 1b are coupled and spaced apart by posts 5 of magnetic material such that the magnets 2a and 2b face each other. A moving coil 3 is inserted into the space between magnets 2a, 2b to construct the VCM.

The VCM is characterized in that two magnet pieces of rectangular prism or parallelepiped prism shape are disposed on a yoke in an angle or chevron array so that the magnet pieces produce alternate magnetic poles.

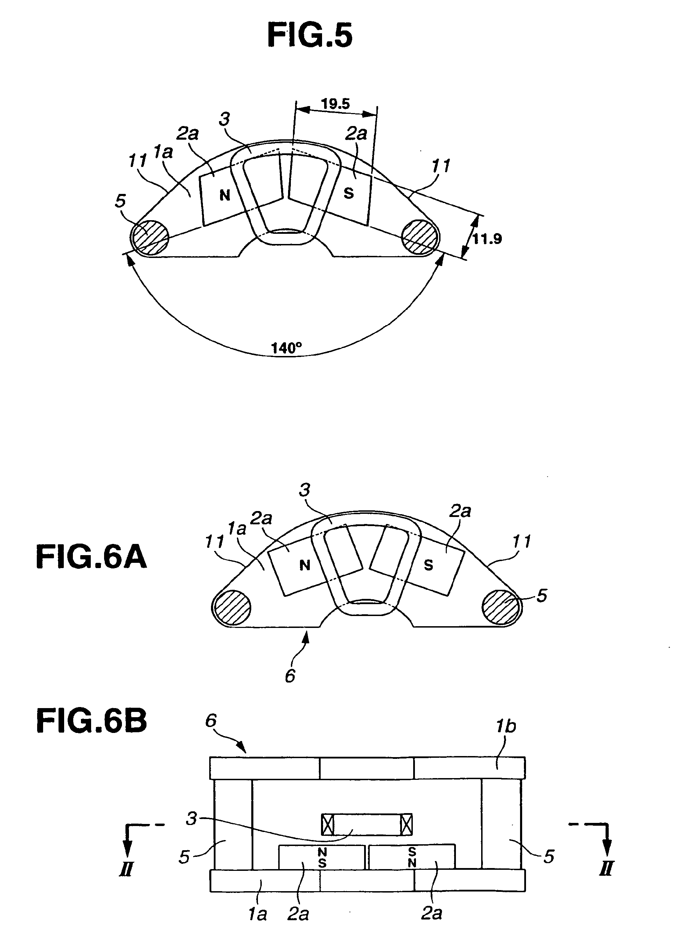

More specifically, in the embodiment of FIGS. 4A and 4B, two magnet pieces 2a, 2a (or 2b, 2b) are of rectangular prism shape. In another embodiment of FIG. 5, two magnet pieces 2a, 2a are of parallelepiped prism shape. It is understood that a magnet piece of rectangular or parallelepiped prism shape has a pair of major surfaces, a pair of end faces, and a pair of side faces. Where two magnet pieces of parallelepiped prism shape are used, they are arranged in an angle array while their end faces may be spaced apart or abut each other (in a "^" shape).

Although two magnet pieces 2a, 2b (or 2b, 2b) are disposed on each of opposed yokes 1a, 1b in the magnetic circuit and VCM of FIGS. 4A and 4B, it is also acceptable that as shown in FIGS. 6A and 6B, two magnet pieces 2a, 2a are disposed on only one yoke 1a in an angle array, no magnet piece is disposed on the other yoke 1b, and the other yoke 1b faces the magnet pieces 2a, 2a. In the latter case, the moving coil 3 is inserted between magnet pieces 2a, 2a and the other yoke 1b.

The yoke has a shape that fits in the magnetic disk unit and is disposed at one corner of a rectangular shaped housing for receiving a magnetic disk. The yoke is generally configured to a triangular shape, a frusto-triangular shape in which the apex of a triangle is truncated or rounded, or an arcuate, crescent or semi-circular ring shape in which the bottom of a triangle at its center is recessed or cut-off in a semi-circular, triangular or apex-rounded triangular form. The yoke is made of a magnetic material such as silicon steel or carbon steel and usually provided at lateral ends with holes through which posts or bolts are fitted to couple magnetic circuits together.

A magnet is registered and adhesively attached onto the yoke. According to the invention, the magnet has a rectangular prism shape (FIGS. 4 and 6) or parallelepiped prism shape (FIG. 5), which facilitates registration of the magnet relative to the yoke. By contrast, when a magnet has an arcuate or curved shape commonly employed in the prior art, registration of the magnet relative to the yoke is less easy, and any misregistration leads to a problem of torque variations.

The disposition of a magnet on a yoke is described. Two magnet pieces 2a, 2a each having a longitudinal axis are preferably disposed in an angle array such that the longitudinal axes of magnet pieces 2a, 2a are parallel or generally parallel to oblique sides 11, 11 of yoke 1. As shown in FIGS. 4 to 6, two magnet pieces are magnetized in a thickness direction to define N and S poles for each and disposed so that they produce alternate magnetic poles in the order of N and S.

Specifically, the longitudinal axes of two magnet pieces cross when extended. For the rectangular prism shape shown in FIGS. 4 and 6, the included angle between the axes is in the range of 60° to less than 180°, and more preferably 90° to less than 180°. If the included angle is too small, a torque may be produced only in a limited range. Similarly for the parallelepiped prism shape shown in FIG. 5, the included angle is in the range of 60° to less than 180°, and more preferably 90° to less than 180°.

As long as two magnet pieces are disposed at an angle, they may be spaced apart. It is preferable that two magnet pieces have the same shape. In some cases, however, two magnet pieces may not have the same shape, e.g. for the reason of size reduction.

Usually, the yoke is punched with bosses for registration of a magnet piece. In this case, the assembly is easier when two spaced-apart magnet pieces are disposed on the yoke.

For attachment of magnet pieces, heat resistant adhesives such as epoxy resins or acrylic resins are preferably used to attach the magnet pieces to the yoke.

The magnet pieces used herein may have a rectangular prism or parallelepiped prism shape as mentioned above, with the rectangular prism shape being preferred from the working aspect. Ordinary magnets used in the industry include sintered magnets prepared from magnetizable raw materials by melting, grinding, molding and sintering, and bonded magnets prepared by melting, grinding, and resin-aided molding. This is also true in the invention. When a rectangular mold is used in the molding step, the molded part may be easily machined to the desired hexahedral structure. Then the yield of magnet working is improved. Magnets may be worked into a rectangular shape using a peripheral milling edge or wire saw.

As described above, either sintered magnets or bonded magnets may be used in the practice of the invention. They may be ferrite, alnico or rare earth magnets. In the case of rare earth magnets which are susceptible to oxidation, a plating of metal such as Ni or Cu or a coating of antioxidant is recommended.

In the embodiment of FIG. 4 wherein a pair of magnet pieces are disposed on each of two yokes, the magnetic circuits each consisting of a yoke and a magnet attached thereto are assembled so that the magnets face each other while they are spaced apart by magnetic material posts, and an arm having a moving coil wound thereon is inserted into the space defined between the magnetic circuits, constructing a VCM. In the embodiment of FIG. 6 wherein a pair of magnet pieces are disposed on one yoke, but not on the other yoke, the components are assembled so that the magnet pieces face the other yoke, and an arm having a moving coil wound thereon is inserted into the space defined between the magnet pieces and the other yoke, constructing a VCM. The magnetic circuits to be opposed should have the same properties. The resulting VCM operates in accordance with Fleming's rule to drive the moving coil for imparting thrust to the actuator.

### EXAMPLE

Examples of the invention are given below by way of illustration and not by way of limitation.

### Example 1

A Nd-Fe-B sintered magnetizable block (N48M by Shin-Etsu Chemical Co., Ltd.) was machined into rectangular prisms of 20.2 mm x 11.9 mm x 6 mm. Two pieces in an angle array were adhesively attached to a yoke of carbon steel having a thickness of 5 mm and then magnetized in a thickness direction by means of a magnetizer, so that the angle-arrayed magnet pieces produced alternate magnetic poles along the yoke. In this way, a magnetic circuit was constructed. The angle included between the longitudinal axes of two magnet pieces was 140°.

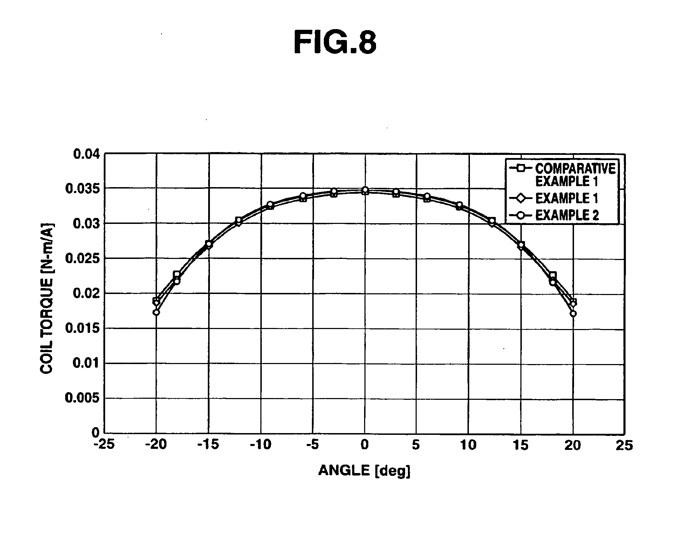

Two yokes (or magnetic circuits) were fixedly coupled by posts to define a space of 10 mm between the magnets. An arm having a moving coil of copper wire wound thereon was inserted into the space, constructing a VCM as shown in FIG. 4. The torque of VCM was measured with the results shown in FIG. 8.

### Example 2

A Nd-Fe-B sintered magnetizable block (N48M by Shin-Etsu Chemical Co., Ltd.) was machined into parallelepiped prisms of 19.5 mm x 11.9 mm x 6 mm. Two pieces in an angle array were adhesively attached to a yoke of carbon steel having a thickness of 5 mm and then magnetized in a thickness direction by means of a magnetizer, so that the angle-arrayed magnet pieces produced alternate magnetic poles along the yoke. In this way, a magnetic circuit was constructed. The angle included between the longitudinal axes of two magnet pieces was 140°.

Two yokes (or magnetic circuits) were fixedly coupled by posts to define a space of 10 mm between the magnets. An arm having a moving coil of copper wire wound thereon was inserted into the space, constructing a VCM as shown in FIG. 5. The torque of VCM was measured with the results shown in FIG. 8.

### Comparative Example 1

A magnetic circuit was constructed as in Example 1 except that one magnetizable piece of arcuate shape of R29 x R16 x 6 mm x 60° was used per yoke, and magnetized to define N and S poles in a planar direction. A VCM as shown in FIG. 3 was constructed and measured for torque, with the results shown in FIG. 8.

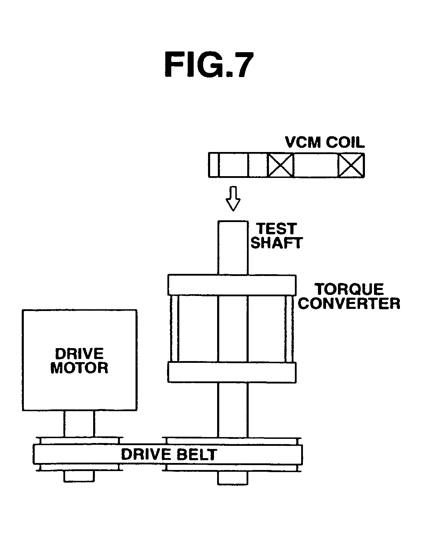

In the foregoing Examples and Comparative Example, the torque of VCM was measured by the following method. FIG. 7 illustrates a coil torque measuring system which includes a drive motor, a test shaft, a drive belt for operatively connecting the drive motor and the shaft, and a torque converter associated with the shaft. A VCM coil is mounted on the test shaft. The drive motor is operated to rotate the VCM coil while the torque is measured by the torque converter. The results are plotted in FIG. 8.

As seen from FIG. 8, a necessary torque is available when prism-shaped magnet pieces which can be efficiently produced at a relatively low cost are used and disposed in an angle array.

## Claims

1. A magnetic circuit for a voice coil motor, comprising a magnetic material yoke (1a;1b) and magnet pieces (2a;2b) disposed thereon to constitute magnet means, and wherein the magnet pieces (2a;2b) disposed on the yoke (1a;1b) consist of only a pair of magnet pieces (2a; 2b), **characterised in that** said magnet pieces (2a; 2b) are of rectangular prism or parallelepiped prism shape having a longitudinal axis, said magnet pieces (2a; 2b) being disposed in an angle array such that an angle of 60° to less than 180° is included between the longitudinal axes of the two magnet pieces (2a; 2b) of a magnet means.

2. The magnetic circuit for a voice coil motor according to claim 1, comprising
a pair of opposed magnetic material yokes (1a; 1b), wherein at least a first one of the pair of yokes (1a; 1b) has a said pair of magnet pieces (2a; 2b) constituting a magnet means disposed on it so that the magnet means faces the second yoke (1b; 1a),
and wherein the magnet pieces (2a; 2b) of said yoke (1a; 1b) produce alternate magnetic poles.

3. The magnetic circuit of claim 2, wherein each of the pair of yokes (1a; 1b) has magnet pieces (2a; 2b) constituting a respective magnet means, so that the magnet means face each other,
the magnet pieces (2a; 2b) disposed on each yoke (1a; 1b) consisting of a pair of magnet pieces (2a; 2b) of rectangular prism or parallelepiped prism shape which are arranged in a said angle array; and wherein the magnet pieces (2a; 2b) of each magnet means produce alternate magnetic poles.

4. A voice coil motor comprising the magnetic circuit of claim 2, and
a moving coil (3) located between the magnet means (2a) and the second yoke (1b).

5. The voice coil motor of claim 4, wherein each of the pair of yokes (1a; 1b) has magnet pieces (2a; 2b) constituting respective magnet means disposed on it so that the magnet means face each other,
the magnet pieces (2a; 2b) disposed on each yoke (1a; 1b) consisting of a respective pair of magnet pieces (2a; 2b) of rectangular prism or parallelepiped prism shape which are arranged in an angle array such that an angle of 60° to less than 180° is included between the longitudinal axes of the two magnet pieces (2a; 2b) of a magnet means; and wherein the magnet pieces (2a; 2b) of each magnet means produce alternate magnetic poles.

## Patentansprüche

1. Magnetkreis für einen Schwingspulenmotor, der Folgendes umfasst:
ein Joch (1a; 1 b) aus Magnetmaterial und darauf angeordnete Magnetstücke (2a; 2b) zur Ausbildung eines Magnetmittels, wobei die Magnetstücke (2a; 2b), die auf dem Joch (1a; 1 b) angeordnet sind, nur aus einem Paar Magnetstücke (2a; 2b) bestehen, **dadurch gekennzeichnet, dass** die Magnetstücke (2a; 2b) eine rechteckige Prismen- oder parallelepipedförmige Prismenform mit einer Längsachse aufweisen, wobei die Magnetstücke (2a; 2b) in einer Winkelanordnung derart vorliegen, dass von den Längsachsen der beiden Magnetstücke (2a; 2b) eines Magnetmittels ein Winkel von 60° bis weniger als 180°eingeschlossen ist.

2. Magnetkreis für einen Schwingspulenmotor nach Anspruch 1, der Folgendes umfasst:
ein Paar entgegengesetzter Joche (1a; 1 b) aus Magnetmaterial, wobei
zumindest ein erstes der beiden Joche (1a; 1 b) das Paar Magnetstücke (2a; 2b) aufweist, die das Magnetmittel bilden und so auf diesem angeordnet sind, dass das Magnetmittel dem zweiten Joch (1b; 1a) zugewandt ist,
und wobei die Magnetstücke (2a; 2b) des Jochs (1a; 1 b) alternierende Magnetpole bilden.

3. Magnetkreis nach Anspruch 2, worin jedes des Paars der Joche (1 a; 1 b) Magnetstücke (2a; 2b) aufweist, die jeweils das Magnetmittel bilden, so dass die Magnetmittel einander zugewandt sind,
wobei die auf jedem Joch (1a; 1 b) angeordneten Magnetstücke (2a; 2b) aus einem Paar Magnetstücke (2a; 2b) bestehen, die eine rechteckige Prismen- oder parallelepipedförmige Prismenform aufweisen und in der Winkelanordnung vorliegen; und wobei die Magnetstücke (2a; 2b) jedes Magnetmittels alternierende Magnetpole bilden.

4. Schwingspulenmotor, der einen Magnetkreis nach Anspruch 2 und
eine bewegliche Spule (3) umfasst, die zwischen dem Magnetmittel (2a) und dem zweiten Joch (1 b) vorliegt.

5. Schwingspulenmotor nach Anspruch 4, worin jedes des Paars der Joche (1 a; 1 b) Magnetstücke (2a; 2b) aufweist, die jeweils ein Magnetmittel bilden, so dass die Magnetmittel einander zugewandt sind,
wobei die auf jedem Joch (1a; 1 b) angeordneten Magnetstücke (2a; 2b) aus einem Paar Magnetstücke (2a; 2b) bestehen, die eine rechteckige Prismen- oder parallelepipedförmige Prismenform aufweisen und in einer Winkelanordnung derart vorliegen, dass von den Längsachsen der beiden Magnetstücke (2a; 2b) ein Winkel zwischen 60° und weniger als 180° eingeschlossen ist; und wobei die Magnetstücke (2a; 2b) jedes Magnetmittels alternierende Magnetpole bilden.

## Revendications

1. Circuit magnétique pour un moteur à bobine mobile, comprenant une culasse en matériau magnétique (1a ; 1b) et des pièces d'aimant (2a ; 2b) disposées sur celle-ci pour constituer des moyens formant aimant, et dans lequel les pièces d'aimant (2a ; 2b) disposées sur la culasse (1a ; 1b) sont constituées d'une seule paire de pièces d'aimant (2a ; 2b), **caractérisé en ce que** lesdites pièces d'aimant (2a ; 2b) sont en forme de prisme rectangulaire ou de prisme parallélépipédique ayant un axe longitudinal, lesdites pièces d'aimant (2a ; 2b) étant disposées dans un réseau angulaire de telle sorte qu'un angle de 60° à moins de 180° soit inclus entre les axes longitudinaux des deux pièces d'aimant (2a ; 2b) de moyens formant aimants.

2. Circuit magnétique pour un moteur à bobine mobile selon la revendication 1, comprenant
une paire de culasses en matériau magnétique (1a, 1b) opposées,
au moins une première de la paire de culasses (1a, 1b) ayant une dite paire de pièces d'aimant (2a ; 2b) constituant des moyens formant aimant disposée sur celle-ci de telle sorte que les moyens formant aimant soient orientés vers la seconde culasse (1b ; 1a),
et dans lequel les pièces d'aimant (2a ; 2b) de ladite culasse (1a ; 1b) produisent des pôles magnétiques alternés.

3. Circuit magnétique selon la revendication 2, dans lequel chacune des paires de culasses (1a, 1b) possède des pièces d'aimant (2a, 2b) constituant des moyens formant aimant respectifs, de telle sorte que les moyens d'aimant soient face à face,
les pièces d'aimant (2a, 2b) disposées sur chaque culasse (1a, 1b) étant constituées d'une paire de pièces d'aimant (2a ; 2b) en forme de prisme rectangulaire ou de prisme parallélépipédique qui sont situées dans un dit réseau angulaire ; et dans lequel les pièces d'aimant (2a ; 2b) de chaque moyen formant aimant produisent des pôles magnétiques alternés.

4. Moteur à bobine mobile comprenant le circuit magnétique selon la revendication 2, et
une bobine mobile (3) située entre les moyens formant aimant (2a) et la seconde culasse (1b).

5. Moteur à bobine mobile selon la revendication 4, dans lequel chacune de la paire de culasses (1a, 1b) possède des pièces d'aimant (2a ; 2b) constituant des moyens formant aimant respectifs disposés sur celle-ci de telle sorte que les moyens formant aimant soient face à face,
les pièces d'aimant (2a ; 2b) disposées sur chaque culasse (1a ; 1b) étant constituées d'une paire respective de pièces d'aimant (2a ; 2b) en forme de prisme rectangulaire ou de prisme parallélépipédique qui sont disposées dans un réseau angulaire de telle sorte qu'un angle de 60° à moins de 180° soit inclus entre les axes longitudinaux des deux pièces d'aimant (2a ; 2b) de moyens formant aimant ; et dans lequel les pièces d'aimant (2a ; 2b) de chaque moyen formant aimant produisent des pôles magnétiques alternés.
